(19) Europäisches Patentamt / European Patent Office / Office européen des brevets

(11) **EP 4 280 788 A1**

(12) **EUROPEAN PATENT APPLICATION**
published in accordance with Art. 153(4) EPC

(43) Date of publication:
**22.11.2023 Bulletin 2023/47**

(21) Application number: **21919399.2**

(22) Date of filing: **15.01.2021**

(51) International Patent Classification (IPC):
*H04W 74/08* (2009.01)

(52) Cooperative Patent Classification (CPC):
**H04W 74/08**

(86) International application number:
**PCT/JP2021/001359**

(87) International publication number:
**WO 2022/153506 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.
Tokyo 100-6150 (JP)**

(72) Inventors:
• **ECHIGO Haruhi
Tokyo 100-6150 (JP)**
• **KURITA Daisuke
Tokyo 100-6150 (JP)**
• **HARADA Hiroki
Tokyo 100-6150 (JP)**

(74) Representative: **Hoffmann Eitle
Patent- und Rechtsanwälte PartmbB
Arabellastraße 30
81925 München (DE)**

(54) **WIRELESS BASE STATION AND TERMINAL**

(57)    A terminal simultaneously applies inter-slot frequency hopping and intra-slot frequency hopping to transmission of a message in a random access channel procedure. The terminal repeatedly transmits the messages.

FIG. 9

EP 4 280 788 A1

**Description**

[Technical Field]

The present disclosure relates to a radio base station and a terminal capable of repeating messages in a random access channel procedure.

[Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.
For example, in 3 GPP Release-17, a Work Item on Coverage Enhancement (CE) in NR was agreed upon (Non-Patent Literature 1).
Specifically, the specification of the Physical Uplink Shared Channel (PUSCH) Repetition, which is used to transmit Random Access Channel (RACH) procedural messages (Msg3), is being studied.

[Citation List]

[Non-Patent Literature]

"New WID on NR coverage enhancements," RP-202928, 3 GPP TSG RAN meeting # 90 e, 3 GPP, December 2020

[Summary of Invention]

For Msg 3, re-transmission has been specified, but it is considered that there is room for improvement in the method of distinguishing between repetitions and terminals (User Equipment, UE) in such retransmissions.
Therefore, the following disclosure has been made in view of this situation, and the purpose of the disclosure is to provide radio base stations and terminals that can further improve the performance with respect to the Repetition of the RACH procedure message (Msg3).
One aspect of the disclosure is a radio base station (gNB 100) including a reception unit (radio signal transmission and reception unit 210) that receives a message in a random access channel procedure from a first type terminal and a second type terminal, and
a control unit (control unit 270) that determines the first type terminal or the second type terminal based on the message.
One aspect of the disclosure is a terminal (UE 200) including a control unit (control unit 270) that simultaneously applies inter-slot frequency hopping and intra-slot frequency hopping to transmission of a message in a random access channel procedure, and a transmission unit (radio signal transmission and reception unit 210) that repeatedly transmits the messages.

[Brief Description of Drawings]

[Fig. 1]

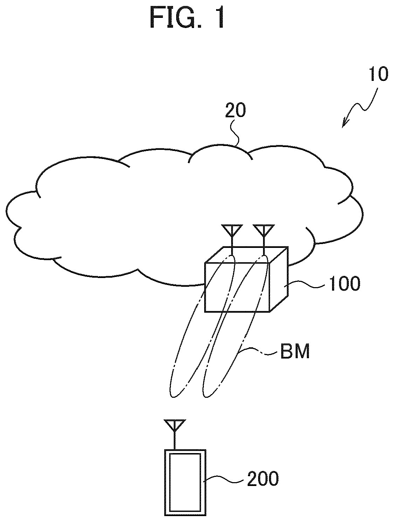

Fig. 1 is an overall schematic diagram of radio communication system 10.
[Fig. 2]

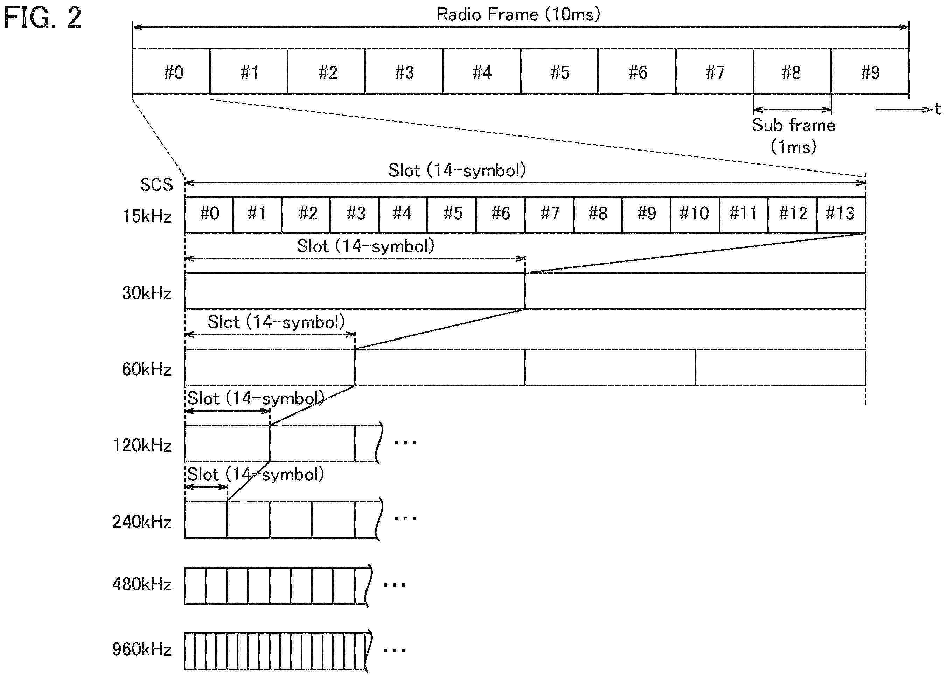

Fig. 2 is a diagram showing an example configuration of the radio frame, subframe and slot used in radio communication system 10.
[Fig. 3]

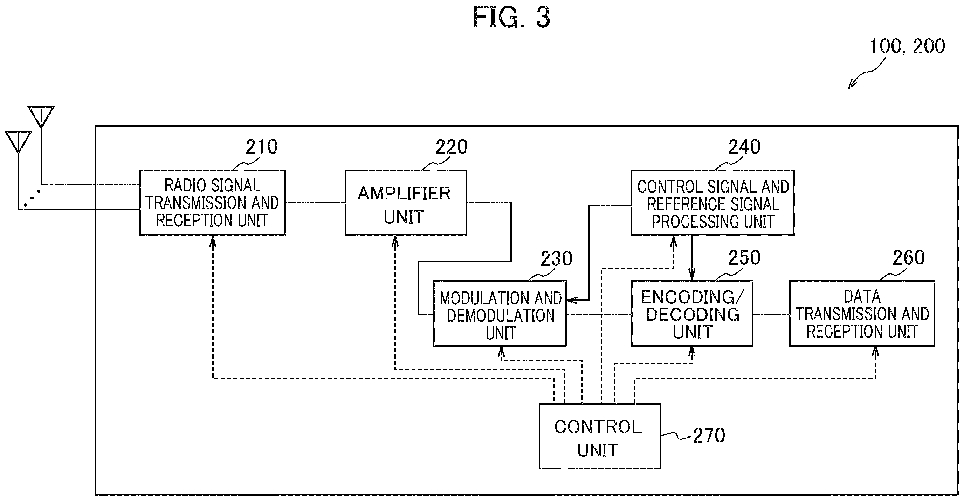

Fig. 3 is a functional block diagram of gNB 100 and UE 200.
[Fig. 4]

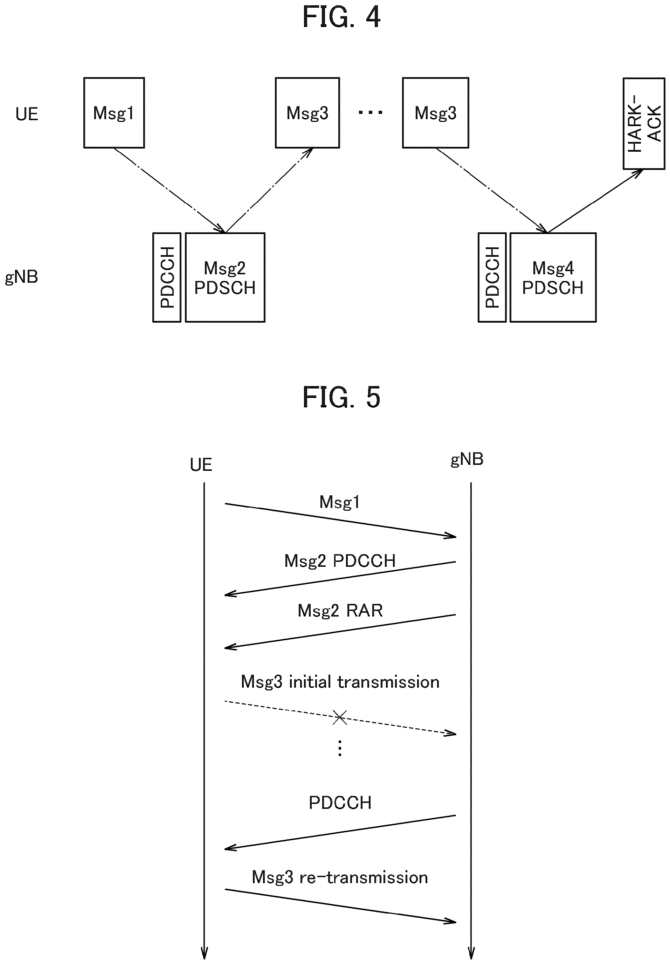

Fig. 4 shows an example of a random access sequence containing Msg3's Repetition.
[Fig. 5]
Fig. 5 shows an example of a random access sequence that includes the initial transmission and re-transmission of Msg3.
[Fig. 6]

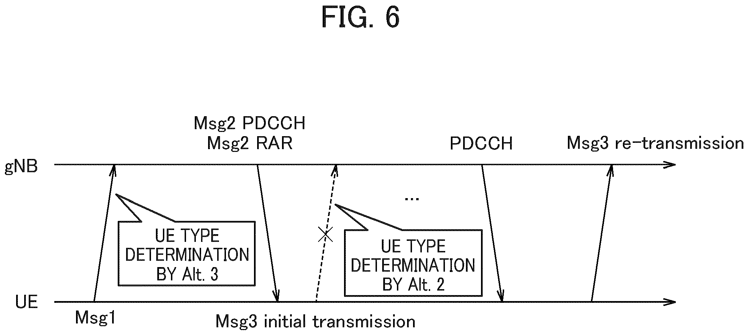

Fig. 6 shows an example of the random access sequence in operation example 1.

EP 4 280 788 A1

[Fig. 7]

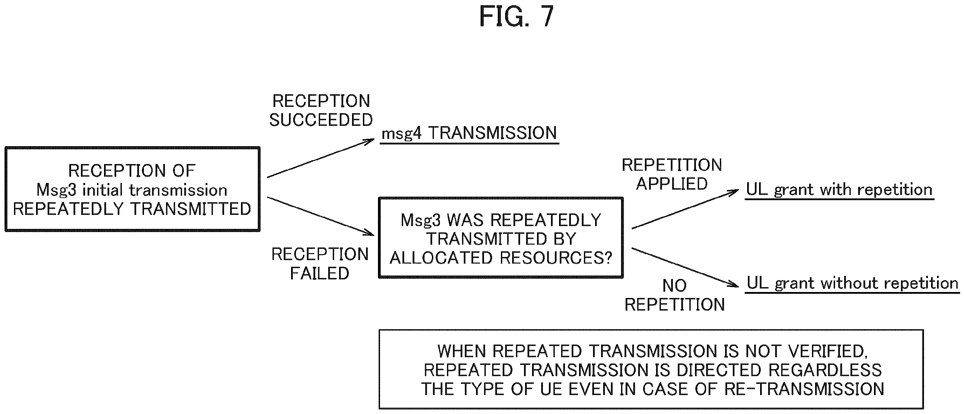

Fig. 7 is a diagram showing an example of Msg3 transmission operation flow in operation example 1 (Alt2-Opt2).
[Fig. 8]

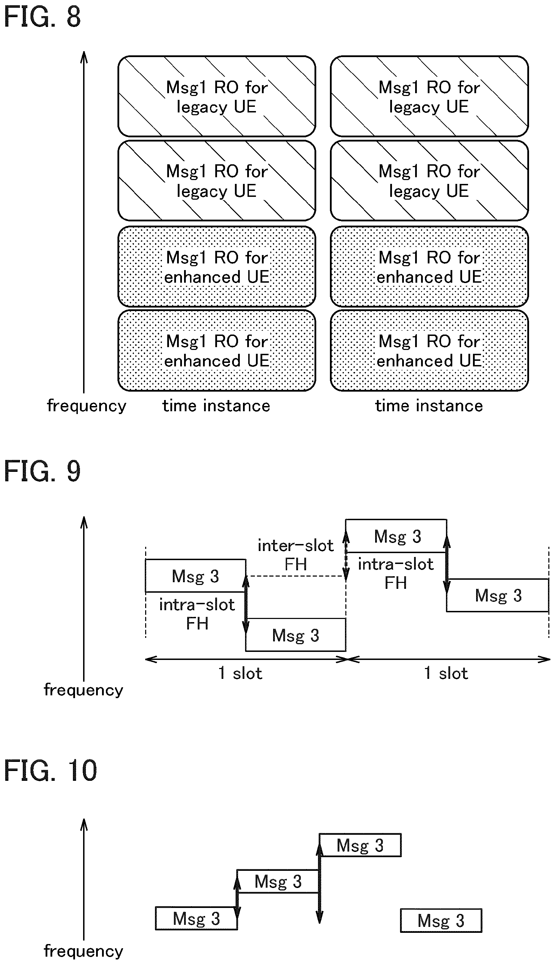

Fig. 8 is a diagram showing an example of allocation of RACH occurrence in operation example 1 (Alt3 - Opt2,3).
[Fig. 9]
Fig. 9 is a diagram showing an example of simultaneous application of inter-slot frequency hopping and intra-slot frequency hopping of Msg3 in operation example 2.
[Fig. 10]
Fig. 10 is a diagram showing an application example of frequency offset in operation example 2 (Case 1).
[Fig. 11]

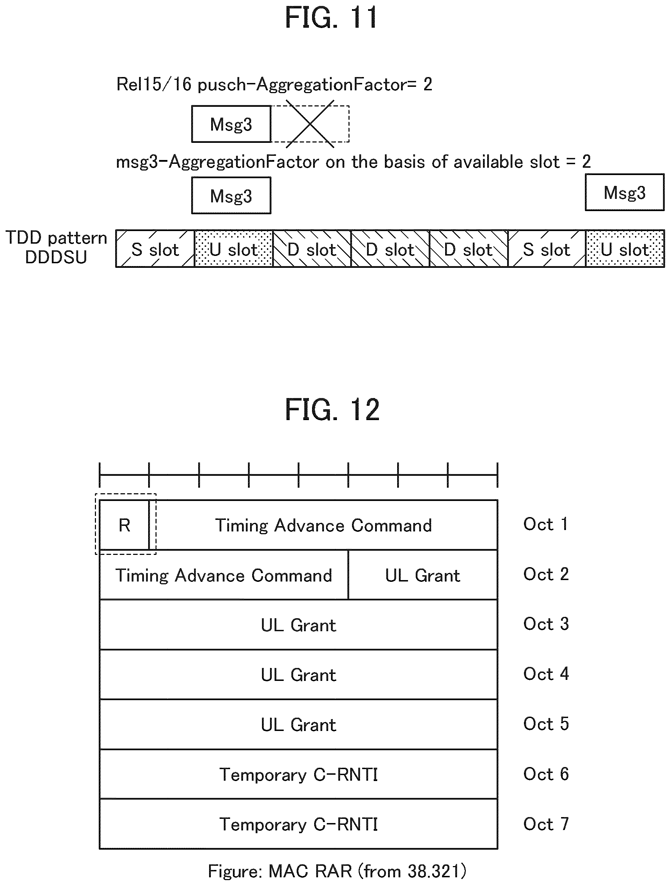

Fig. 11 shows an example of slot arrangement of Msg3 according to operation example 3.
[Fig. 12]
Fig. 12 shows an example configuration of the MAC RAR according to Operation Example 3.
[Fig. 13]

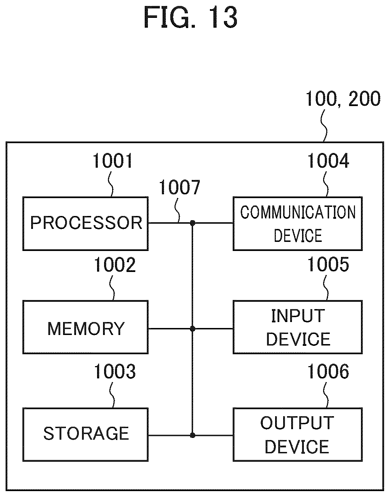

Fig. 13 shows an example of the hardware configuration of the gNB 100 and UE 200.

[Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

(1)Overall schematic configuration of the radio communication system

Fig. 1 is an overall schematic configuration of a radio communication system 10 according to this embodiment. The radio communication system 10 is radio communication system according to 5G New Radio (NR) and includes Next Generation-Radio Access Network 20 (NG-RAN 20), and Terminal 200 (User Equipment 200, below, UE 200) .

The radio communication system 10 may be radio communication system according to a scheme called Beyond 5G, 5G Evolution or 6G.

NG-RAN 20 includes a radio base station 100 (Below: gNB 100). The specific configuration of radio communication system 10 including the number of gNBs and UEs is not limited to the example shown in Fig. 1.

The NG-RAN 20 actually includes multiple NG-RAN nodes, specifically, gNBs (or ng-eNBs), and is connected to a core network (5 GC, not shown) according to 5G. Note that the NG-RAN 20 and 5 GCs may simply be described as a network.

The gNB 100 is a radio base station according to NR and performs radio communication according to UE 200 and NR. By controlling radio signals transmitted from multiple antenna elements, the gNB 100 and UE 200 can support Massive MIMO which generates beam BM with higher directivity, carrier aggregation (CA) which uses multiple component carriers (CC) bundled together, and dual connectivity (DC) which simultaneously communicates between the UE and each of the multiple NG-RAN nodes.

The radio communication system 10 corresponds to FR1 and FR2. The frequency bands of each FR (Frequency Range) are as follows:
- FR 1: 410 MHz to 7.125 GHz

- FR 2: 24.25 GHz to 52.6 GHz

FR 1 uses sub-carrier spacing (SCS) of 15, 30 or 60 kHz and may use a bandwidth (BW) of 5 ~ 100 MHz. FR 2 is a higher frequency than FR 1, uses SCS of 60 or 120 kHz (240 kHz may be included) and may use a bandwidth (BW) of 50 ~ 400 MHz.

In addition, the radio communication system 10 may support a higher frequency band than the frequency band of the FR 2. Specifically, the radio communication system 10 may support frequency bands beyond 52.6 GHz and up to 114.25 GHz.

It may also apply Cyclic Prefix-Orthologous Frequency Division Multiplexing (CP-OFDM)/Discrete Fourier Transform-Spread (DFT-S-OFDM) with larger Sub-Carrier Spacing (SCS). Furthermore, DFT-S-OFDM may be applied not only to the uplink (UL) but also to the downlink (DL) .

Fig. 2 shows an example configuration of the radio frame, subframe and slot used in radio communication system 10.

As shown in Fig. 2, one slot consists of 14 symbols, and the larger (wider) the SCS, the shorter the symbol period (and slot period). The number of symbols constituting 1 slot need not necessarily be 14 (For example, 28, 56 symbols). In addition, the number of slots per subframe may vary depending on the SCS. In addition, the SCS may be wider than 240 kHz (For example, as shown in Fig. 2, 480 kHz, 960 kHz).

Note that the time direction (t) shown in Fig. 2 may be referred to as a time domain, symbol period or symbol time. The frequency direction may also be referred to as a frequency domain, resource block, subcarrier or BWP (bandwidth part).

The radio communication system 10 can support Coverage Enhancement (CE) to extend the coverage of the cells (or even physical channels) formed by the gNB 100. The coverage enhancement may provide a mechanism to increase the reception success rate of the various physical channels.

For example, the gNB 100 can support repeated PDSCH (Physical Downlink Shared Channel) transmissions, and the UE 200 can support repeated PUSCH (Physical Uplink Shared Channel) transmissions.

In addition, more than one type of UE 200 may be used in the radio communication system 10. For example, as the UE 200, there may be more than one type of terminal with different functions or performance or with different 3 GPP releases to support. The terminal (UE) may be referred to as a type 1 terminal and a type 2 terminal. The type may also be replaced by other terms such as generation, release, etc. first type and type 2 terminals may be referred to as enhanced UE and legacy UE, respectively. An enhanced UE supports the latest release of 3GPP, and a legacy UE may be interpreted as a UE that does not support the latest release.

On the radio communication system 10, a time division duplex (TDD) slot configuration pattern may be configured. For example, a DDDSU (D: downlink (DL symbol, S: DL/Uplink (UL) or Guard symbol, U: UL symbol) may be specified (see 3 GPP TS 38.101-4).

"D" indicates a slot containing all DL symbols, and "S" indicates a slot containing a mixture of DL, UL, and guard symbols (G). "U" indicates a slot containing all UL symbols.

(2)Function block configuration of radio communication system

Next, the functional block configuration of the radio communication system 10 is described. Specifically, the functional block configuration of the UE 200 is described. Fig. 3 is a functional block configuration diagram of the gNB 100 and the UE 200.

As shown in Fig. 3, UE 200 comprises a radio signal transmission and reception unit 210, an amplifier unit 220, a modulation and demodulation unit 230, a control signal and a reference signal processing unit 240, an encoding/decoding unit 250, a data transmission and reception unit 260 and a control unit 270.

Note that only the main functional blocks related to the description of the embodiment are shown in Fig. 3, and the UE 200 (gNB 100) has other functional blocks (For example, the power supply). Also, Fig. 3 shows the functional block configuration of the UE 200, and see Fig. 13 for the hardware configuration.

The radio signal transmission and reception unit 210 transmits and receives radio signals in accordance with NR. By controlling radio (RF) signals transmitted from multiple antenna elements, the radio signal transmission and reception unit 210 can support Massive MIMO for generating more directional beams, Carrier Aggregation (CA) for bundling multiple component carriers (CCs), and Dual Connectivity (DC) for simultaneously communicating between the UE and each of the two NG-RAN nodes.

The radio signal transmission and reception unit 210 may also transmit a physical uplink shared channel. Specifically, the radio signal transmission and reception unit 210 may transmit PUSCH toward the network (gNB 100). The radio signal transmission and reception unit 210 may support repetition of PUSCH.

Multiple types of repetition of PUSCH transmission may be specified. Specifically, repetition type A and repetition type B may be specified. Repetition type A may be interpreted as a form in which a PUSCH allocated in a slot is repeatedly transmitted. That is, a PUSCH is less than or equal to 14 symbols and may not be allocated across multiple slots (adjacent slots).

On the other hand, a repetition type B may be interpreted as a repeated transmission of a PUSCH that may be allocated more than 15 symbols. In this embodiment, it may be permitted to allocate such a PUSCH across multiple slots.

The radio signal transmission and reception unit 210 may also send the random access preamble as the first message (Msg1 below) in the random access channel procedure (Below is the RACH (Random Access Channel) procedure.).

The radio signal transmission and reception unit 210 may receive the second message (Msg2 below) as a response message (random access response (RAR)) to Msg 1 in the RACH procedure.

After receiving Msg 2, the radio signal transmission and reception unit 210 may transmit the third message (Msg3 below) via PUSCH in the RACH procedure.

The radio signal transmission and reception unit 210 may receive the fourth message (Msg4 below) as a response message for Msg 3 in the RACH procedure (3 GPP TS 38.321 V 16.2.1 5 5.1 "Random Access procedure").

For example, Msg 1 may be transmitted via PRACH (Physical Random Access Channel). Msg 1 may be referred to as PRACH Preamble. Msg2 may be transmitted via PDSCH. Msg2 may be referred to as RAR (Random Access Response). Msg3 may be referred to as RRC Connection Request. Msg4 may be referred to as RRC Connection Setup.

The radio signal transmission and reception unit 210 performs repeated transmission of Msg3. In this embodiment, the radio signal transmission and reception unit 210 may constitute a transmission unit that repeatedly transmits messages. Details of the repeated transmission of Msg 3 will be described later.

The amplifier unit 220 is composed of PA (Power Amplifier)/LNA (Low Noise Amplifier), etc. The amplifier unit 220 amplifies the signal output from the modulation and demodulation unit 230 to a predetermined power level. The amplifier unit 220 also amplifies the RF signal output from radio signal transmission and reception unit 210.

The modulation and demodulation unit 230 performs data modulation/demodulation, transmission power setting and resource block allocation for each predetermined communication destination (such as the gNB 100). On the modulation and demodulation unit 230, Cyclic Prefix-Orthologous Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing for various control signals transmitted and received by the UE 200 and processing for various reference signals transmitted and received by the UE 200.

Specifically, the control signal and reference signal processing unit 240 receives various control signals transmitted from the gNB 100 via a predetermined control channel, such as control signals of a radio resource control layer (RRC). The control signal and reference signal processing unit 240 also transmits various control signals to the gNB 100 via a predetermined control channel.

The control signal and reference signal processing unit 240 performs processing using a reference signal (RS) such as a Demodulation Reference Signal (DMRS) and a Phase Tracking Reference Signal (PTRS).

DMRS is a known reference signal (pilot signal) between individual base stations and terminals for estimating a fading channel used for data demodulation. PTRS is a reference signal for individual terminals for estimating phase noise, which is a problem in high frequency bands.

In addition to DMRS and PTRS, the reference signal may include Channel State Information-Reference Signal (CSI-RS), Sounding Reference Signal (SRS), and Positioning Reference Signal (PRS) for location information.

In addition, the channel includes a control channel and a data channel. Control channels may include PDCCH (Physical Downlink Control Channel), PUCCH (Physical Uplink Control Channel), RACH (Downlink Control Information (DCI) including Random Access Channel, Random Access Radio Network Temporary Identifier (RA-RNTI)), and Physical Broadcast Channel (PBCH).

Data channels may also include PDSCH (Physical Downlink Shared Channel), and PUSCH (Physical Uplink Shared Channel). Data may mean data transmitted through a data channel.

The control signal and reference signal processing unit 240 may also transmit to the network the capability information of the UE 200 regarding the assignment of a physical uplink shared channel (PUSCH).

Specifically, the control signal and reference signal processing unit 240 may transmit to the gNB 100 the UE Capability Information regarding the assignment of PUSCH (which may include repetition). Details of the UE Capability Information will be described later.

The encoding/decoding unit 250 performs data division/concatenation and channel coding/decoding for each predetermined communication destination (gNB 100 or other gNB).

Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and concatenates the decoded data.

The data transmission and reception unit 260 transmits and receives protocol data units (PDU) and service data units (SDU). Specifically, the data transmission and reception unit 260 performs assembly/disassembly of PDUs/SDUs in multiple layers (Media access control layer (MAC), radio link control layer (RLC), and packet data convergence protocol layer (PDCP), etc.). The data transmission and reception unit 260 also performs error correction and retransmission control of data based on a hybrid automatic repeat request (ARQ).

The control unit 270 controls each functional block that constitutes the UE 200. Specifically, in this embodiment, the control unit 270 performs control over the Repetition of PUSCH for Msg 3.

Specifically, the control unit 270 may simultaneously apply inter-slot frequency hopping and intra-slot frequency hopping to the transmission of message (For example, Msg3) in the RACH procedure.

Simultaneous application means that both hopping are applied within a predetermined period in the time direction, and a predetermined time may be in units of multiple slots or subframes.

Inter-slot frequency hopping may be interpreted as the transmission of the message (which may be a channel) using (hopping to) several different frequency (which may be a subcarrier, etc.) positions between multiple slots (see Fig. 2).

Inter-slot frequency hopping may be interpreted as the transmission of the message (which may be a channel) using (hopping to) several different frequency (which may be a subcarrier, etc.) positions within the same slot. Specific examples of inter-slot frequency hopping and intra-slot frequency hopping will be described later.

The control unit 270 may also determine the simultaneous application of inter-slot frequency hopping and intra-slot frequency hopping based on the pattern of frequency hopping applied to the repetition of the message.

Specifically, the control unit 270 may determine whether inter-slot frequency hopping and intra-slot frequency hopping are applied simultaneously based on the pattern of frequency hopping directed from the network or pre-specified as the 3 GPP specification.

The control unit 270 may also determine the slot in which the message can be repeated. Specifically, control unit 270 may assign the message to a repeatable slot designated by the network or specified in advance as a 3 GPP specification. An example of the arrangement of such a repetition will be described later.

Also, the functions related to the coverage extension described above may be provided in gNB 100. For example, the gNB 100 may be equipped with an radio signal transmission and reception unit 210 that receives messages (For example, Msg3) in the RACH procedure from first type and second type terminals and an control unit 270 that identifies a first type or second type terminal based on the messages.

In addition, the control unit 270 of the gNB 100 may identify a first type or second type terminal in the initial transmission or re-transmission of a message (For example, Msg3) transmitted via PUSCH (uplink data channel). As described above, first type and second type terminals may mean enhanced UE and legacy UE, respectively.

(3)Operation of radio communication system

Next, the operation of radio communication system 10 will be described. Specifically, the operation related to the repetition of the message (Msg 3) of the RACH procedure will be described.

(3.1) Assumptions

Fig. 4 shows an example of a random access sequence containing Msg3's Repetition. As shown in Fig. 4, the UE 200 first transmits Msg1 to NG-RAN 20 (gNB 100) according to the RACH procedure. Msg1 may be referred to as a random-access preamble, as described above.

The UE 200 receives Msg2 corresponding to Msg1 from the NG-RAN 20. The UE 200 sends Msg3 corresponding to Msg2 to the NG-RAN 20. As shown in Fig. 4, Msg3 may be transmitted repeatedly. Although not shown, Msg1 or the like may be transmitted repeatedly.

The UE 200 may receive Msg4 for any one of the Msg3 from the NG-RAN 20. The UE 200 may send an acknowledgement (HARQ (Hybrid Automatic repeat request)-ACK) for Msg 4 to NG-RAN 20.

Fig. 5 shows an example of a random access sequence that includes the initial transmission and re-transmission of Msg 3.

As shown in Fig. 5, the 3GPP specification specifies the re-transmission of Msg 3. The re-transmission of Msg 3 may be performed if the initial transmission of Msg 3 fails (is not received by the network).

For the re-transmission of Msg 3, resources may be allocated by DCI format 0 _ 0 with CRC scrambled by TC-RNTI (Radio Network Temporary Identifier).

The PUSCH Repetition used for the transmission of Msg 3 (may include re-transmission) may be related to the Type A PUSCH Repetition.

Existing PUSCH mapping types include Type A and Type B. Type A may be used only for Repetition Type A, and Type B may be used for both Repetition Type A and Repetition Type B. Existing Types A and B assume per-slot allocation, so the value of L may not exceed "14" (number of symbols) (see section 6.1.2 of 3 GPP TS 38.214 V 16.2.0).

(3.2) Overview of operation

The following describes operation example 1 ~ 3 related to Msg 3 (or PUSCH) Repetition.

■ (Operation example 1): Distinguishing between enhanced UE and legacy UE

■ (Alt 1): Not distinguishing between enhanced UE and legacy UE
■ (Alt2): only when Msg3 re-transmission
■ (Alt3): distinguish between enhanced UE and legacy UE in Msg1/Msg3

- (Operation example 2): inter-slot frequency hopping related operation

    - Simultaneous use of inter-slot frequency hopping and intra-slot frequency hopping
    - Notification of frequency offset
    - Notification of hopping patterns at three or more frequencies

- (working example 3): Notification of Msg3 Repetition-related information

    - PUSCHrepetitions for Msg3
    - PUSCHrepetitions for initial transmission Msg3
    - PUSCHrepetitions for re-transmission Msg3

(3.3) Operation Example 1

In this operation example, enhanced UE and legacy UE may be discriminated. Fig. 6 shows an example of the random access sequence in operation example 1.

As shown in Fig. 6, NG-RAN 20 (gNB 100) may determine whether Msg3 Repetition is applicable to a UE, that is, whether it is an enhanced UE or a legacy UE, before transmitting Msg3.

Alternatively, as in Alt 1 described above, enhanced UE and legacy UE may not be determined in the initial transmission and re-transmission of Msg3. In this case, the gNB 100 may notify the UE 200 of the presence or absence of Msg3 Repetition, regardless of the UE type, and allocate related resources.

In the case of Alt2, the enhanced UE and legacy UE may not be distinguished by initial transmission, and the enhanced UE and legacy UE may be distinguished by re-transmission.

In the case of Alt3, the enhanced UE and legacy UE may be distinguished by initial transmission and re-transmission.

In the case of Alt2, the enhanced UE and legacy UE may be distinguished by Msg3 re-transmission according to either of the following:

    - (Opt1): Report the UE identity that can distinguish the enhanced UE or legacy UE in Msg3 of the initial transmission

In this case, the initial transmission need not indicate Repetition. If Repetition is not indicated, resource consumption can be suppressed.

In addition, if an enhanced UE and a legacy UE can be determined by Msg3 in the initial transmission, Msg3 Repetition in re-transmission may be instructed.

    - (Opt2): Whether or not re-transmission is required is instructed depending on whether or not Msg3 has Repetition in the initial transmission.

Fig. 7 shows an example of Msg3 transmission operation flow in operation example 1 (Alt2-Opt2). The NG-RAN 20 (gNB 100) may indicate the repetition in the initial transmission of Msg3, regardless of the type of UE, and determine and/or inform whether or not the UE is allowed to repeat when the initial transmission is received, depending on whether or not Msg3 is repeatedly transmitted.

In the case of Alt3, the handling of the enhanced UE and the legacy UE may follow either of the following:

    - (Opt1): Assigns different initial bandwidths to the enhanced UE and the legacy UE.
    - (Opt2): Uses different RACH preambles to the enhanced UE and the legacy UE.
    - (Opt3): use different RACH occurrences for enhanced UE and legacy UE
    - (Opt4): enhanced UE uses a specific OCC (Orthologous Cover Code) pattern in Msg1 transmitted repeatedly

In this case, the UE capability of the UE 200 may also be suppressed (hidden/concealed). In addition, if it is determined to be an enhanced UE, Msg 3 Repetition may be set in the initial transmission and re-transmission.

Fig. 8 shows an allocation example of RACH occurrence for operation example 1 (Alt3 - Opt2,3). In the RACH-ConfigGeneric Information Element (IE), msg1-FDMEnhanced may be added in addition to msg1-FDM. RACH-ConfigGeneric is defined in 3 GPP TS 38.331.

Fig. 8 shows an example of assigning RACH occurrence for enhanced UE and legacy UE when msg1-FDM = 2 and msg1-FDMEnhancedUE = 2 are set. Specifically, two ROs are assigned to each enhanced UE and legacy UE that differ in at least either the time domain or the frequency domain.

(3.4) Operation Example 2

In this operation example, inter-slot frequency hopping of Msg3 is supported in Type A PUSCH Repetition.
Fig. 9 shows an example of simultaneous application of inter-slot frequency hopping and intra-slot frequency hopping of Msg3 in Operation Example 2.
Specifically, the following cases may be supported:

- (Case 1): Choose between inter-slot frequency hopping or intra-slot frequency hopping

In this case, the offset value may specify two or more and allow hopping (FH) using three or more frequencies.
- (Case 2): Use both inter-slot frequency hopping and intra-slot frequency hopping simultaneously

As shown in Fig. 9, by using different offsets (in the frequency direction) for inter-slot frequency hopping and intra-slot frequency hopping, hopping using more frequencies becomes possible.
Fig. 10 shows an application example of the frequency offset according to operation example 2 (Case 1). In the case of Case 1, the frequency offset value may be determined by any of the following:

- (Opt1): specifies the offset value table specified in 3GPP Release 15/16 by FDRA (Frequency Domain Resource Allocation)

In this case, the same offset value may be used for inter-slot frequency hopping and intra-slot frequency hopping. In addition, hopping (FH) using three or more frequencies may be enabled by specifying two or more offsets using a reserved bit.
- (Opt2): Use a dedicated offset value table for inter-slot frequency hopping

Table 1

| In this case, the offset corresponding to the bit field may be changed for inter-slot frequency hopping. Alternatively, a pattern of hopping three or more frequencies may be specified by the bit | | |
|---|---|---|
| **Number of PRes in initial UL BWP** | **Value of Hopping Bits** | **Frequency offset for 2nd hop** |
| $N_{BWP}^{size} < 50$ | 0 | $\lfloor N_{BWP}^{size}/2 \rfloor$ |
| | 1 | $\lfloor N_{BWP}^{size}/4 \rfloor$ |
| $N_{BWP}^{size} \geq 50$ | 00 | $\lfloor N_{BWP}^{size}/2 \rfloor$ |
| | 01 | $\lfloor N_{BWP}^{size}/4 \rfloor$ |
| | 10 | $-\lfloor N_{BWP}^{size}/4 \rfloor$ |
| | 11 | Reserved |

field.

Also, in the case of Case 2, the offset value of inter-slot frequency hopping may be determined by either:

- (Opt1): Determined based on the offset value of intra-slot frequency hopping

For example, if the offset value of intra-slot frequency hopping is N BWP ^ size/4, the offset value of inter-slot frequency hopping may be N _ BWP ^ size/2, -N _ BWP ^ size/2. If the offset value of intra-slot frequency hopping is N BWP ^ size/2, the offset value of inter-slot frequency hopping may be N BWP ^ size/4, -N _ BWP ^ size/4.
Configuring such an offset value is an example, and the offset value of intra-slot frequency hopping may be different from the offset value of inter-slot frequency hopping. Rules for calculating such an offset value may be set in advance, or the offset value may be notified by signaling in an upper layer (such as RRC).

    ▪ (Opt2): set independently of the intra-slot frequency hopping offset

For example, for Msg3 initial transmission, the offset may be set by upper layer signaling or the RAR payload (more on this later). Also, for Msg3 re-transmission, the offset may be set by upper layer signaling or DCI.

(3.5) Example 3

In this example, Msg3 Repetition-related information is notified to the UE 200. Specifically, PUSCH repetitions for Msg3 may be specified in advance as 3GPP specifications without notification. In addition, PUSCH repetitions for Msg3 may be determined according to the frequency (band, which may be band) used by the UE 200.

More specifically, the presence or absence of PUSCH repetitions for Msg3 and/or the pattern of frequency hopping may be notified (and specified).

The pattern of frequency hopping may be selected from, for example, inter-slot frequency hopping, intra-slot frequency hopping, or the application of both inter-slot frequency hopping and intra-slot frequency hopping.

The number of times of repetition may also be notified. In this case, (the number of) slots into which Repetition can be placed may be specified instead of the number of slots.

Fig. 11 shows an example of slot placement of Msg 3 in operation example 3. As shown in Fig. 11, in the DDDSU configuration of TDD, Msg 3 cannot be placed in consecutive slots (see the x-mark), so that Repetition cannot be performed (dropped).

Therefore, when two Msg 3 are placed, as indicated by "msg3 - Aggregation Factor on the basis of available slot = 2," Msg 3 may be assigned to a placeable U slot.

PUSCHrepetitions for initial transmission Msg3 may be notified by one or a combination of the following: PUSCHrepetitions for initial transmission Msg3 may also be determined by the frequency used (band, which may be band) of the UE 200.

▪ Upper Layer Signaling

For example, PUSCH-ConfigCommon IE or RACH-ConfigCommon IE may be used.

▪ Msg2 RAR

Fig. 12 shows a configuration example of the MAC RAR according to operation example 3. Specifically, in the case of notification by MAC RAR, either of the following may be selected:

    ▪ (Alt1): sends MAC RAR with different configuration to enhanced UE

    ▪ (Alt2): implicitly notifies with information about UL grant

For example, information related to the Transmit Power Control (TPC) command or the Modulation and Coding Scheme (MCS) may be associated. In this case, the content to be associated may be set by a prescribed rule or by a radio base station.

    ▪ (Alt3): Notification using reserved bit (Reserved bit, dotted box in figure)

For example, the presence or absence of Repetition is notified by a reserved bit, and other Repetition (initial transmission/re-transmission) related information may be notified by a higher layer.

For PUSCHrepetitions for re-transmission Msg3, one or a combination of the following may apply: PUSCHrepetitions for re-transmission Msg3 may also be determined according to the frequency used (band, which may be band) of the UE 200.

    ▪ Sharing information on Msg3 initial transmission and Msg3 Repetition
    ▪ Notification via upper layer signaling

For example, PUSCH-ConfigCommon IE or RACH-ConfigCommon IE may be used.
- Notification by DCI format 0 _ 0 with CRC scrambled by TC-RNTI

Specifically, either of the following may apply:

- (Alt1): Implicitly notifies the relevant information of the Repetition, depending on the CCE (Control channel element) index where the DCI is located

- (Alt2): Notifies the relevant information of the Repetition, using the reserved bits of the HARQ process number, New data indicator

- (Alt3): implicitly notified by DCI information

For example, information related to TDRA, TPC command and MCS may be associated. In this case, the content to be associated may be set by a prescribed rule or by a radio base station.
- RNTI for DCI with CRC scrambled by enhanced UE

RNTI for enhanced UE may be allocated by RAR. Relevant information of the repetition may be notified by DCI for enhanced UE.

(4)Operational effects

According to the above described embodiment, the following working effects can be obtained. Specifically, the gNB 100 can determine an enhanced UE or a legacy UE based on a message (For example, Msg3) sent over a PUSCH (uplink data channel). Also, the UE 200 can simultaneously apply inter-slot frequency hopping and intra-slot frequency hopping to the transmission of a message in a RACH procedure.
Such operation of the gNB 100 and the UE 200 can improve the performance with respect to the repetition of the message (Msg 3) in a RACH procedure.
In this embodiment, the gNB 100 can determine the enhanced UE or legacy UE in the first transmission or retransmission of the message transmitted via PUSCH.
The UE 200 can also determine the simultaneous application of inter-slot frequency hopping and intra-slot frequency hopping based on the pattern of frequency hopping applied to the repetition of the message, and further determine the slot in which the message can be repeated.
Therefore, the performance of the RACH procedure message (Msg 3) with respect to the repetition can be further improved.

(5)Other Embodiments

Although the above description of the embodiment is not limited to the description of the embodiment, it is obvious to those skilled in the art that various modifications and improvements are possible.
For example, in the above described embodiment, Msg3 and PUSCH with respect to the Repetition are described, but the above mentioned operation with respect to the Repetition may be applied to the message in the RACH procedure or other uplink channels.
Also, PUSCH may be called a physical uplink shared channel, and may not necessarily be PUSCH as long as it is a channel (physical channel) shared by multiple UE 200 (users) in UL.
In addition, the block diagram (Fig. 3) used for the explanation of the above embodiment shows a block for each functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.
Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that makes transmission work is called a transmitting unit (transmission unit) or transmitter. In either case, as described above, the implementation method is not particularly limited.

Furthermore, the above-mentioned gNB 100 and UE 200 (the device) may function as a computer for processing the radio communication method of the present disclosure. Fig. 13 shows an example of the hardware configuration of the device. As shown in Fig. 13, the device may be configured as a computer device including a processor 1001, a memory 1002, a storage 1003, a communication device 1004, an input device 1005, an output device 1006 and a bus 1007, etc.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see Fig. 3) is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 controls the entire computer by, for example, operating the operating system. The processor 1001 may consist of a central processing unit (CPU) including interfaces to peripheral devices, controllers, arithmetic units, registers, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be called a register, cache, main memory (main memory), etc. The memory 1002 can store programs (program code), software modules, etc., that can execute a method according to one embodiment of this disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device such as a processor 1001 and a memory 1002 is connected by a bus 1007 for communicating information. The bus 1007 may be configured using a single bus or different buses for each device.

Furthermore, the device may be configured including hardware such as a microprocessor, a digital signal processor (DSP), an application specific integrated circuit (ASIC), a programmable logic device (PLD), a field programmable gate array (FPGA), etc., with which some or all of the functional blocks may be implemented. For example, the processor 1001 may be implemented by using at least one of these hardware.

In addition, notification of information is not limited to the mode/embodiment described in this disclosure and may be made using other methods. For example, notification of information may be carried out by physical layer signaling (e.g., Downlink Control Information (DCI), Uplink Control Information (UCI), higher layer signaling (e.g., RRC signaling, Medium Access Control (MAC) signaling, notification information (Master Information Block (MIB), System Information Block (SIB)), other signals or a combination thereof. Also, RRC signaling may be referred to as RRC messages, for example, RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, etc., of each mode/embodiment described in this disclosure may be reordered as long as there is no conflict. For example, the method described in this disclosure uses an illustrative order to present elements of various steps and is not limited to the specific order presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in this disclosure may be used alone, in combination, or switched over as practice progresses. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). Also, the signal may be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, airplanes, etc.), an unmanned mobile body (For example, drones, self-driving cars, etc.) or a robot (manned or unmanned). At least one of a base station and a mobile station can be a device that does not necessarily move during the communication operation. For example, at least one of a base station and a mobile station may be an Internet of Things (IoT) device such as a sensor.

The base station in this disclosure may also be read as a mobile station (user terminal, hereinafter the same). For example, each mode/embodiment of this disclosure may be applied to a configuration in which communication between a base station and a mobile station is replaced with communication between multiple mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side"). For example, terms an uplink channel, a downlink channel, or the like may be read as a side channel.

Similarly, mobile stations in this disclosure may be replaced with base stations. In this case, the base station may have the function of the mobile station. A radio frame may be composed of one or more frames in the time domain. Each frame or frames in the time domain may be referred to as a subframe. A subframe may be further configured by one or more slots in the time domain. Subframes may have a fixed length of time (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in units of time larger than a minislot may be called a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframes and TTI may be a subframe (1 ms) in an existing LTE, may have a duration shorter than 1 ms (For example, 1-13 symbols), or may have a duration longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. In addition, the number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be identified by an index of RBs relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include," "including," and variants thereof are intended to be inclusive in a manner similar to the term "comprising." Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" and "determination" may include regarding some action as "judgment" and "determination." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

[Explanation of Reference Numerals]

10 radio communication system
20 NG-RAN
100 gNB
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 Storage
1004 communication device
1005 input device
1006 output device
1007 bus

**Claims**

1. A radio base station comprising:

   a reception unit that receives a message in a random access channel procedure from a first type terminal and a second type terminal; and
   a control unit that determines the first type terminal or the second type terminal based on the message.

2. The radio base station according to claim 1, wherein the control unit determines the first type terminal or the second type terminal in an initial transmission or retransmission of the message transmitted over an uplink data channel.

3. A terminal comprising:

   a control unit that simultaneously applies inter-slot frequency hopping and intra-slot frequency hopping to transmission of a message in a random access channel procedure; and
   a transmission unit that repeatedly transmits the messages.

4.  The terminal according to claim 3, wherein the control unit determines simultaneous application of the inter-slot frequency hopping and the intra-slot frequency hopping based on a pattern of frequency hopping applied to repetition of the message.

5.  The terminal according to claim 3, wherein the control unit determines a slot in which the repetition of the message is possible.

# FIG. 1

FIG. 2

# FIG. 3

100, 200

EP 4 280 788 A1

# FIG. 4

UE

| Msg1 | | Msg3 | ··· | Msg3 | | HARK- ACK |

gNB

PDCCH | Msg2 PDSCH | | | PDCCH | Msg4 PDSCH |

# FIG. 5

UE                                          gNB

Msg1

Msg2 PDCCH

Msg2 RAR

Msg3 initial transmission
×
⋮

PDCCH

Msg3 re-transmission

# FIG. 6

# FIG. 7

RECEPTION
SUCCEEDED

msg4 TRANSMISSION

```
RECEPTION OF
Msg3 initial transmission
REPEATEDLY TRANSMITTED
```

RECEPTION
FAILED

```
Msg3 WAS REPEATEDLY
TRANSMITTED BY
ALLOCATED RESOURCES?
```

REPETITION
APPLIED

UL grant with repetition

NO
REPETITION

UL grant without repetition

```
WHEN REPEATED TRANSMISSION IS NOT VERIFIED,
REPEATED TRANSMISSION IS DIRECTED REGARDLESS
THE TYPE OF UE EVEN IN CASE OF RE-TRANSMISSION
```

EP 4 280 788 A1

## FIG. 8

frequency    time instance      time instance

## FIG. 9

frequency

## FIG. 10

frequency

# FIG. 11

Rel15/16 pusch-AggregationFactor= 2

| Msg3 | ✕ |
|------|---|

msg3-AggregationFactor on the basis of available slot = 2

| Msg3 | | | | | | Msg3 |

TDD pattern
DDDSU

| S slot | U slot | D slot | D slot | D slot | S slot | U slot |

# FIG. 12

| | | | |
|---|---|---|---|
| R | Timing Advance Command | | Oct 1 |
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

Figure: MAC RAR (from 38.321)

# FIG. 13

100, 200

1001

1007

PROCESSOR

1004

COMMUNICATION
DEVICE

1002

MEMORY

1005

INPUT
DEVICE

1003

STORAGE

1006

OUTPUT
DEVICE

**EP 4 280 788 A1**

<table>
<tr><td colspan="2"><strong>INTERNATIONAL SEARCH REPORT</strong></td><td>International application No.<br>PCT/JP2021/001359</td></tr>
</table>

| A. CLASSIFICATION OF SUBJECT MATTER |
|---|
| H04W 74/08(2009.01)i |
| FI: H04W74/08 |
| According to International Patent Classification (IPC) or to both national classification and IPC |

| B. FIELDS SEARCHED |
|---|
| Minimum documentation searched (classification system followed by classification symbols)<br>H04W4/00-99/00, H04B7/24-7/26 |

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

| Electronic data base consulted during the international search (name of data base and, where practicable, search terms used) |
|---|

C. DOCUMENTS CONSIDERED TO BE RELEVANT

| Category* | Citation of document, with indication, where appropriate, of the relevant passages | Relevant to claim No. |
|---|---|---|
| X | NEC, Discussion on Msg3 coverage enhancement [online], 3GPP TSG RAN WG1 #103e R1-200880, Internet<URL:https://www.3gpp.org/ftp/tsg_ran/WG1_RL1/TSGR1_103-e/Docs/R1-2008080.zip>, 26 October 2020 section 2.2 | 1, 2 |
| X | CHINA TELECOM, Discussion on Msg3 PUSCH enhancements [online], 3GPP TSG RAN WG1 #103-e R1-2007996, Internet<URL:https://www.3gpp.org/ftp/tsg_Ran/WG1_RL1/TSGR1_103-e/Docs/R1-2007996.zip> 26 October 2020 section 2 | 1, 2 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 August 2021 (10.08.2021) | Date of mailing of the international search report<br>31 August 2021 (31.08.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

| | INTERNATIONAL SEARCH REPORT | International application No. |
|---|---|---|
| | | PCT/JP2021/001359 |

C (Continuation). DOCUMENTS CONSIDERED TO BE RELEVANT

| Category* | Citation of document, with indication, where appropriate, of the relevant passages | Relevant to claim No. |
|---|---|---|
| Y | CATT, PUSCH enhancements for URLLC [online], 3GPP TSG RAN WG1 #98b R1-1910343, Internet <URL: https://www.3gpp.org/ftp/tsg_ran/WG1_RL1/TSGR1_98b /Docs/R1-1910343.zip>, 14 October 2019 section 2.3, fig. 5 | 3-5 |
| Y | ZTE CORPORATION, Discussion on potential techniques for channels other than PUSCH and PUCCH [online], 3GPP TSG RAN WG1 #103-e R1-2007745, Internet<URL:https://www.3gpp.org/ftp/tsg_ran/WG1_ RL1/TSGR1_103-e/Docs/R1-2007745.zip>, 26 October 2020 section 2.2 | 3-5 |

Form PCT/ISA/210 (continuation of second sheet) (January 2015)

# INTERNATIONAL SEARCH REPORT

International application No.

PCT/JP2021/001359

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.  Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2021/001359

<Continuation of Box No. III>

Document 1: NEC, Discussion on Msg3 coverage enhancement [online], 3GPP TSG RAN WG1 #103e R1-200880, Internet<URL:https://www.3gpp.org/ftp/tsg_ran/WG1_RL1/TSGR1_103-e/Docs/R1-2008080.zip>, 26 October 2020

    (Invention 1) Claims 1 and 2
    Claims 1 and 2 have the special technical feature of a "wireless base station provided with a reception unit for receiving a message in a random access channel procedure from a first type of terminal and a second type of terminal and a control unit for determining the first type of terminal or the second type of terminal on the basis of the message," and are thus classified as invention 1.

    (Invention 2) Claims 3-5
    Claims 3-5 share, with claim 1 classified as invention 1, the common technical feature of "communicating a message in a random access channel procedure." However, said technical feature does not make a contribution over the prior art in light of the disclosure of document 1, and thus cannot be said to be a special technical feature. Also, there are no other identical or corresponding special technical features between these inventions.
    In addition, claims 3-5 are not dependent on claim 1. Furthermore, claims 3-5 are not substantially identical or equivalent to any of the claims classified as invention 1.
    Thus, claims 3-5 cannot be classified as invention 1.
    Also, claims 3-5 have the special technical feature of a "terminal provided with a control unit for simultaneously applying frequency hopping between slots and frequency hopping within slots with respect to transmission of a message in a random access channel procedure and a transmission unit for repeatedly transmitting the message," and are thus classified as invention 2.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New WID on NR coverage enhancements. *RP-202928, 3 GPP TSG RAN meeting # 90 e, 3 GPP,* December 2020